(19) Europäisches Patentamt
European Patent Office
Office européen des brevets

(11) Veröffentlichungsnummer : **0 423 594 B1**

(12) # EUROPÄISCHE PATENTSCHRIFT

(45) Veröffentlichungstag der Patentschrift : **24.11.93 Patentblatt 93/47**

(51) Int. Cl.$^5$ : **C08J 9/08,** C08J 9/34, C08G 18/00

(21) Anmeldenummer : **90119315.1**

(22) Anmeldetag : **09.10.90**

(54) **Verfahren zur Herstellung von Formkörpern aus Polyurethanschaumstoffen.**

(30) Priorität : **20.10.89 DE 3934955**

(43) Veröffentlichungstag der Anmeldung : **24.04.91 Patentblatt 91/17**

(45) Bekanntmachung des Hinweises auf die Patenterteilung : **24.11.93 Patentblatt 93/47**

(84) Benannte Vertragsstaaten : **AT BE CH DE DK ES FR GB IT LI NL SE**

(56) Entgegenhaltungen :
**EP-A- 0 145 250**
**EP-A- 0 372 292**
**FR-A- 2 509 317**
**Database WPI, no 80-63253c Derwent Publications & JP-A-55098218**
**Becker/Braun, Kunststoff-Handbuch, Bd.7(1983) S.334 und 248**

(73) Patentinhaber : **BAYER AG**
**D-51368 Leverkusen (DE)**

(72) Erfinder : **Neuhaus, Alfred**
**Habichtgasse 2**
**W-5090 Leverkusen 1 (DE)**
Erfinder : **Kopp, Richard, Dr.**
**Bilharzstrasse 15**
**W-5000 Köln 80 (DE)**
Erfinder : **Pilger, Friedhelm, Dr.**
**Selesiusstrasse 80**
**W-5000 Köln 80 (DE)**
Erfinder : **Avar, Géza, Dr.**
**Hermann-v.-Helmholtz-Strasse 26**
**W-5090 Leverkusen 1 (DE)**

EP 0 423 594 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein neues Verfahren zur Herstellung von Formkörpern aus Polyurethanschaumstoffen mit kompakter Oberfläche, bei welchem als Treibmittel Salze aus (i) organischen Carbonsäuren und (ii) mindestens eine NH-Bindung aufweisenden Stickstoffbasen eingesetzt werden, und die so erhaltenen Formkörper.

Die Herstellung von Formkörpern aus Polyurethanschaumstoffen mit kompakter Oberfläche durch Formverschäumung ist grundsätzlich bekannt (z.B. DE-AS 1 196 864). Sie erfolgt durch Formverschäumung eines reaktions- und schaumfähigen Gemischs aus organischen Polyisocyanaten, Verbindungen mit gegenüber Isocyanatgruppen reaktionsfähigen Gruppen und den üblichen Hilfs- und Zusatzmitteln, wobei man in die Form eine größere Menge an reaktionsfähigem Gemisch einträgt, als zum Ausfüllen des Formvolumens durch freie Verschäumungen erforderlich wäre. Durch geeignete Wahl der Ausgangskomponenten, insbesondere durch geeignete Wahl ihres Molekulargewichts und ihrer Funktionalität ist es dabei möglich, sowohl weiche als auch halbharte als auch harte Formkörper herzustellen. Die dichte Außenhaut wird hierbei dadurch erreicht, daß man einerseits in die Form eine größere Menge an schaumfähigem Gemisch einträgt, als zum Ausfüllen des Formvolumens durch freie Verschäumung erforderlich wäre und andererseits als Treibmittel Fluorchlorkohlenwasserstoffe verwendet, die an der Forminnenwand unter den vorherrschenden Temperatur- und Druckbedingungen kondensieren, so daß die Treibreaktion an der Forminnenwand zum Stillstand kommt und eine kompakte Außenhaut entsteht.

Neben den genannten physikalischen Treibmitteln wird in der technischen Polyurethanchemie auch Wasser als chemisches Treibmittel in Form des durch Reaktion zwischen Wasser und Isocyanaten entstehenden Kohlendioxids verwendet. Mit diesem chemischen Treibmittel lassen sich zwar freigeschäumte Polyurethanschaumstoffe von ausgezeichneter Qualität herstellen, nicht jedoch qualitativ hochwertige Schaumstoff-Formkörper mit kompakter Oberfläche (Integralschaumstoffe). Dies liegt daran, daß das Kohlendioxid unter den üblichen Bedingungen an der Forminnenwand nicht kondensiert und somit die Treibwirkung in der Randzone nicht gebremst wird.

Grundsätzlich mit dem gleichen Problem behaftet und daher zur Herstellung von hochwertigen Integralschaumstoffen ungeeignet sind andere chemische oder physikalische Treibmittel, wie beispielsweise stickstoffabspaltende Treibmittel wie Azo-dicarbonamid, Azo-bis-isobutyronitril, kohlendioxidabspaltende Treibmittel wie Pyrokohlensäureester und -anhydride (US-PS 4 070 310) oder in den Reaktionskomponenten, insbesondere der Komponente mit gegenüber Isocyanatgruppen reaktionsfähigen Gruppen gelöste Treibmittel wie beispielsweise Luft.

Wie jetzt überraschend gefunden wurde, gelingt es jedoch, qualitativ hochwertige Formkörper aus Polyurethanschaumstoffen mit kompakter Oberfläche aus den üblichen Ausgangsmaterialien unter Verwendung von Salzen aus (i) organischen Carbonsäuren und (ii) mindestens eine NH-Bindung aufweisenden Stickstoffbasen herzustellen, obwohl auch hierbei die Treibwirkung im wesentlichen auf einer Freisetzung von Kohlendixoid beruht.

Gemäß DE-OS 3 041 589 werden zwar spezielle gemischte Carbonsäure-Carbamidsäure-Anhydride, wie sie aus Carbonsäuren und aliphatischen Isocyanaten entstehen, als Treibmittel zur Herstellung von Polyurethanschaumstoffen, insbesondere Integralschaumstoffen, beschrieben, jedoch ist dieses Verfahren für den großtechnischen Einsatz aus folgenden Gründen nicht geeignet:

Die gemischten Anhydride sollen einerseits bei Temperaturen von bis ca. 60°C, auch in Lösung, lagerstabil sein und andererseits bereits ab ca. 80°C unter Freisetzung von Kohlendioxid die Treibwirkung entfalten. Man bewegt sich daher hinsichtlich der Kohlendioxid-Abspalttemperatur auf einem sehr engen Grat. Zur Herstellung der gemischten Anhydride können nur aliphatische Isocyanate eingesetzt werden. Die üblicherweise als Polyisocyanatkomponente verwendeten aromatischen Polyisocyanate sind demgegenüber zur Herstellung der speziellen Treibmittel ungeeignet.

Zur Durchführung des Verfahrens müssen die gemischten Anhydride zunächst in einer separaten Reaktion hergestellt und isoliert und schließlich vorsichtig mit dem Polyolgemisch abgemischt werden. Dies sind zusätzliche Verfahrensschritte, die den Einsatz dieser Verbindungen weiter verteuern und kompliziert erscheinen lassen.

Gebrauchsfertige, die genannten Treibmittel enthaltende Polyole können kaum gelagert und gefahrlos transportiert werden, da bei Überhitzungen, die trotz sorgfältiger Handhabung zuweilen auftreten können, die Gefahr eines gefährlichen Druckaufbaus nicht ausgeschlossen werden kann.

Gemäß einem älteren eigenen Vorschlag (deutsche Patentanmeldung P 38 40 817.1) werden als Treibmittel die freien Säuren eingesetzt, die auch den erfindungsgemäß, wie nachstehend beschrieben, einzusetzenden Salzen zugrundeliegen. Diese Verwendung von freien Säuren als Treibmittel ist nicht Gegenstand der vorliegenden Erfindung.

Gegenstand der Erfindung ist ein Verfahren zur Herstellung von Formkörpern einer Rohdichte von mindestens 250 kg/$m^3$ aus Polyurethanschaumstoffen mit einer kompakten Oberfläche durch Formverschäumung eines Reaktionsgemischs aus

a) einer Polyisocyanatkomponente, bestehend aus mindestens einem aromatischen Polyisocyanat, mit einem NCO-Gehalt von mindestens 20 Gew.-%,
b) einer Reaktivkomponente bestehend aus mindestens einer organischen Polyhydroxylverbindung,
c) Treibmitteln
und gegebenenfalls
d) weiteren Hilfs- und Zusatzmitteln

unter Einhaltung einer Isocyanatkennzahl von 75 bis 1500, dadurch gekennzeichnet, daß man als Treibmittel Salze aus (i) organischen Carbonsäuren und (ii) mindestens eine N-H-Bindung aufweisenden Stickstoffbasen verwendet, wobei die Verwendung von in situ in der Komponente b) aus di- und polyfunktionellen Aminen und organischen Carbonsäuren hergestellten Salzen ausgenommen ist.

Gegenstand der Erfindung sind auch die nach diesem Verfahren erhaltenen Formkörper.

Als Polyisocyanat-Komponente a) kommen beliebige aromatische Polyisocyanate mit einem NCO-Gehalt von mindestens 20 Gew.-% in Betracht. Beispiele hierfür sind 2,4-Diisocyanatotoluol, dessen technischen Gemische mit 2,6-Diisonyanatotoluol oder, bevorzugt, die bekannten Polyisocyanate oder Polyisocyanatgemische der Diphenylmethanreihe wie sie beispielsweise durch Phoegenierung von Anilin/Formaldehyd-Kondensaten und gegebenenfalls destillative Aufarbeitung der Phosgenierungsprodukte zugänglich sind. Diese für das erfindungsgemäße Verfahren besonders gut geeigneten Polyisocyanate oder Polyisocyanatgemische weisen im allgemeinen einen Gehalt an Diisocyanatodiphenylmethan-Isomeren von 50 bis 100 Gew.-% auf und bestehen im wesentlichen zum Rest aus höherfunktionellen Homologen dieser Diisocyanate. Die in diesen Gemischen vorliegenden Diisocyanate bestehen im wesentlichen aus 4,4'-Diisocyanatodiphenylmethan in Abmischung mit bis zu 60 Gew.-%, bezogen auf die Gesamtmenge der Diisocyanate, an 2,4'-Diisocyanatodiphenylmethan und gegebenenfalls geringen Mengen an 2,2'-Diisocyanatodiphenylmethan. Auch Urethan-, Carbodiimid- oder Allophanat-modifizierte Derivate dieser Polyisocyanate können als Polyisocyanatkomponente a) eingesetzt werden.

Bei der Reaktivkomponente b) handelt es sich um mindestens eine organische Verbindung mit mindestens zwei gegenüber Isocyanatgruppen reaktionsfähigen Hydroxylgruppen, d.h., um die aus der Polyurethanchemie an sich bekannten organischen Polyhydroxylverbindungen. Im allgemeinen handelt es sich um Gemische von mehreren derartigen Verbindungen.

In Betracht kommen insbesondere die an sich bekannten Polyhydroxypolyether des Molekulargewichtsbereichs 400 bis 10 000, vorzugsweise 1500 bis 6000, die pro Molekül mindestens 2, vorzugsweise 2 bis 6 Hydroxylgruppen der genannten Art aufweisen. Derartige Polyhydroxypolyether werden in an sich bekannter Weise durch Alkoxylierung von geeigneten Startermolekülen erhalten. Geeignete Startermoleküle sind beispielsweise Wasser, Propylenglykol, Glycerin, Trimethylolpropan, Sorbit, Rohrzucker, Aminoalkohole wie Ethanolamin oder Diethanolamin oder aliphatische Amine wie n-Hexylamin oder 1,6-Diaminohexan bzw. beliebige Gemische derartiger Startermoleküle. Geeignete Alkoxylierungsmittel sind insbesondere Propylenoxid und gegebenenfalls Ethylenoxid, welches im Gemisch mit Propylenoxid oder auch separat in getrennten Reaktionsschritten während der Alkoxylierungsreaktion zur Anwendung gelangen kann.

Auch die an sich bekannten Modifizierungsprodukte derartiger Polyetherpolyole, d.h. die bekannten Pfropfpolyether auf Basis der beispielhaft genannten einfachen Polyetherpolyole bzw. die bekannten Polyadditionsprodukte als Füllstoffe enthaltende Polyetherpolyole, beispielsweise Polyhydrazocarbonamide als disperse Füllstoffe enthaltende Polyetherpolyole sind geeignet.

Auch die üblichen Polyesterpolyole des Molekulargewichtsbereichs 400 bis 10.000, vorzugsweise 1500 bis 4000, die pro Molekül mindestens zwei, vorzugsweise 2 bis 6 Hydroxylgruppen aufweisen, sind als Komponente b) bzw. als Teil der Komponente b) geeignet. Geeignete Polyesterpolyole sind die an sich bekannten Umsetzungsprodukte von überschüssigen Mengen an mehrwertigen Alkoholen der als Startermoleküle bereits beispielhaft genannten Art mit mehrbasischen Säuren wie beispielsweise Bernsteinsäure, Adipinsäure, Phthalsäure, Tetrahydrophthalsäure oder beliebigen Gemischen derartiger Säuren.

Auch niedermolekulare Polyhydroxylverbindungen, d.h. solche eines Molekulargewichtsbereichs von 62 bis 399 sind als Komponente b) bzw. als Teil der Komponente b) geeignet. Hierzu gehören die aus der Polyurethanchemie an sich bekannten niedermolekularen, Hydroxylgruppen aufweisenden Kettenverlängerungsmittel bzw. Vernetzer wie Alkanpolyole der bereits oben als Startermoleküle beispielhaft genannten Art oder auch niedermolekulare Polyetherpolyole, wie sie durch Alkoxylierung dieser Startermoleküle zugänglich sind.

Die Komponente b) besteht, wie bereits ausgeführt, vorzugsweise aus organischen Polyhydroxylverbindungen bzw. aus Gemischen organischer Polyhydroxylverbindungen der beispielhaft genannten Art, wobei als Komponente b) sowohl Gemische der beispielhaft genannten höhermolekularen Polyhydroxylverbindungen

mit den beispielhaft genannten niedermolekularen Polyhydroxylverbindungen als auch niedermolekulare Polyhydroxylverbindungen der beispielhaft genannten Art allein in Betracht kommen.

Als Treibmittel c) werden erfindungsgemäß Salze aus (i) organischen Carbonsäuren und (ii) mindestens eine N-H-Bindung aufweisenden Stickstoffbasen, gegebenenfalls zusammen mit anderen an sich bekannten chemischen oder physikalischen Treibmitteln, eingesetzt.

Geeignete Carbonsäuren zur Herstellung der Salze sind insbesondere aliphatische Carbonsäuren des Molekulargewichtsbereichs 46 bis 500, vorzugsweise 60 bis 300. Besonders bevorzugt sind solche aliphatische Carbonsäuren, die neben einer Carboxylgruppe mindestens eine weitere gegenüber Isocyanatgruppen reaktionsfähige Gruppe, ausgewählt aus der Gruppe bestehend aus primären alkoholischen Hydroxylgruppen, sekundären alkoholischen Hydroxylgruppen, Mercaptogruppen, primären Aminogruppen, sekundären Aminogruppen oder Carboxylgruppen, enthalten.

In Betracht kommen somit einfache Monocarbonsäuren wie Essigsäure, Propionsäure, Pivalinsäure, Cyclohexancarbonsäure, Dodecansäure, Stearinsäure, Ölsäure bzw. Gemische derartiger Säuren, vorzugsweise jedoch aliphatische Carbonsäuren, die zusätzlich zur Carboxylgruppe weitere Reaktivgruppen der genannten Art enthalten, wie beispielsweise Milchsäure, Glykolsäure, Weinsäure, 2-Mercaptoessigsäure, 3-Mercaptopropionsäure, Hydroxypivalinsäure, 6-Aminohexansäure, 6-Methylaminohexansäure, Bernsteinsäure, Adipinsäure oder Hexahydrophthalsäure (cycloaliphatische Verbindungen werden im Rahmen der Erfindung als aliphatische Verbindungen angesehen). Besonders bevorzugt wird Milchsäure (2-Hydroxypropansäure) als organische Carbonsäure verwendet.

Die Verwendung von aromatischen Carbonsäuren wie beispielsweise von Benzoesäure, 4-Methylbenzoesäure oder Phthalsäure ist zwar prinzipiell möglich, jedoch weniger bevorzugt.

Geeignete Stickstoffbasen zur Herstellung der erfindungswesentlichen Salze sind beliebige Stickstoffbasen, die mindestens eine NH-Bindung pro Molekül aufweisen und zur Salzbildung mit den Säuren befähigt sind. Gut geeignet sind beispielsweise Amine der allgemeinen Formel

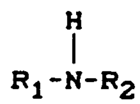 ,

in welcher

- $R_1$ für Wasserstoff, einen gegebenenfalls weitere Stickstoffatome aufweisenden aliphatischen Kohlenwasserstoffrest mit 1 bis 18, vorzugsweise 1 bis 4 Kohlenstoffatomen, einen Hydroxyalkylrest mit 2 bis 4 Kohlenstoffatomen oder einen Rest der Formel -NHR (R = Wasserstoff oder $C_1$-$C_4$-Alkyl) steht und
- $R_2$ Wasserstoff, einen Alkylrest mit 1 bis 18, vorzugsweise 1 bis 4 Kohlenstoffatomen, einen Hydroxyalkylrest mit 2 bis 4 Kohlenstoffatomen, einen gegebenenfalls weitere Aminogruppen aufweisenden aromatischen Kohlenwasserstoffrest mit 6 bis 15 Kohlenstoffatomen oder einen Rest bedeutet, wie er durch Entfernen einer Aminogruppe aus einem Polyaminopolyether mit 2 bis 4 primären, aliphatisch gebundenen Aminogruppen des Molekulargewichtsbereich 400 bis 12 000 erhalten wird, mit der Maßgabe, daß dann $R_1$ für Wasserstoff steht oder in welcher
- $R_1$ und $R_2$ zusammen mit dem Stickstoffatom einen gegebenenfalls weitere Heteroatome aufweisenden, vorzugsweise gesättigten heterocyclischen Ring mit 5 oder 6 Ringgliedern bilden können.

Beispiele für geeignete Amine zur Herstellung der erfindungswesentlichen Salze sind Methylamin, n-Propylamin, 2-Ethylhexylamin, Ethanolamin, Oleylamin, Dimethylamin, Di-n-butylamin, Diethanolamin, Diisopropanolamin, 1,2-Diaminoethan, 1,2- und 1,3-Diaminopropan, 1,6-Diaminohexan, N,N-Dimethyl-ethylendiamin, Piperazin, N-Methylethylendiamin, N-Butyl-1,3-propylendiamin, Diethylentriamin, Triethylentetramin, Anilin, 2,4- und 2,6-Diaminotoluol, 2,4'- und 4,4'-Diaminodiphenylmethan, Ammoniak, Hydrazin, Hydroxylamin oder N-Methylhydrazin. In Betracht kommen aber auch Aminopolyether mit aromatisch oder vorzugsweise aliphatisch gebundenen primären Aminogruppen des Molekulargewichtsbereichs 400 bis 12 000, vorzugsweise 2000 bis 8000. Auch tert. Aminogruppen aufweisende Amine, die neben der tertiären Aminogruppe noch mindestens eine primäre oder sekundäre Aminogruppe aufweisen, wie beispielsweise N,N-Dimethyl-1,3-propylendiamin, sind geeignet.

Die Herstellung der Salze erfolgt in an sich bekannter Weise durch Umsetzung der Säuren mit den beispielhaft genannten Stickstoffbasen. Zur Herstellung der bevorzugten Ammoniumlactate kann beispielsweise so vorgegangen werden, daß die Base vorgelegt und die berechnete Menge an handelsüblicher 90 %iger Milchsäure nach und nach zugegeben wird, wobei die Temperatur vorzugsweise unterhalb 50°C gehalten wird. Nach beendeter Zugabe wird noch ca. 1/2 Std. auf 80°C erhitzt, um eventuell vorhandene Kondensationsprodukte

der Milchsäure in die monomere Form zu überführen.

Bei der Umsetzung mit Ammoniak wird beispielsweise in die 90 %ige Milchsäure bei unterhalb 50°C liegenden Temperaturen die berechnete Menge Ammoniak über ein Gaseinleitungsrohr eingeleitet und danach die Mischung noch ca. 1/2 Std. bei 80°C nachgerührt.

Bei Verwendung von Stickstoffbasen, die keine organischen Di- oder Polyamine darstellen, ist es auch möglich, das Salz in situ in der Polyolkomponente herzustellen durch einfaches Vermischen des monofunktionellen Amins mit der Carbonsäure mit der Polyolkomponente b), wobei die Zugabe der beiden Salzkomponenten in beliebiger Reihenfolge oder auch gleichzeitig erfolgen kann. Die Herstellung in situ von Salzen von di- und polyfunktionellen Aminen fällt unter den Schutzbereich der älteren Anmeldung P 38 40 817.1 und ist nicht Gegenstand der vorliegenden Erfindung. Bei der Herstellung der Salze in situ und auch bei ihrer separaten Herstellung werden im allgemeinen äquivalente Mengen an Amin und Carbonsäure eingesetzt. Es ist jedoch auch möglich, die Aminkomponente in einer überschüssigen Menge einzusetzen, beispielsweise in einem Äquivalentverhältnis von Aminogruppen (dieser Begriff umfaßt stets alle mit den Säuren neutralisierbaren Aminogruppen) zu Carbalkylgruppen von bis zu 4:1. Die Verwendung eines Säureüberschusses ist ebenfalls möglich, beispielsweise in einem Äquivalentverhältnis von Carboxylgruppen zu Aminogruppen von bis zu 4:1, jedoch noch weniger bevorzugt. In beiden Fällen muß die Katalyse des Systems dem jeweiligen Überschuß angeglichen werden. Vorzugsweise liegt das Äquivalentverhältnis von Carboxylgruppen zu mit diesen neutralisierbaren Aminogruppen bei 0,5:1 bis 2:1, insbesondere bei 1:1.

Bei der Durchführung des erfindungsgemäßen Verfahrens können die beispielhaft genannten erfindungswesentlichen Salze auch in Kombination mit untergeordneten Mengen an anderen, an sich bekannten chemischen oder physikalischen Treibmitteln verwendet werden. Hierzu gehören Wasser, in den Ausgangskomponenten physikalisch gelöste Gase wie Luft, Kohlendioxid oder Stickstoff, Pyrokohlensäureester, stickstoffabspaltende Verbindungen, flüchtige Kohlenwasserstoffe oder Halogenkohlenwasserstoffe. Die Mitverwendung von derartigen weiteren Treibmitteln ist jedoch, von der oftmals nicht zu vermeidenden Mitverwendung von Wasser und eingerührter Luft abgesehen, nicht bevorzugt. Diese anderen Treibmittel machen im allgemeinen, falls sie überhaupt anwesend sind, maximal 50, vorzugsweise maximal 25 Gew.-% aller im Reaktionsgemisch vorliegenden Treibmittel aus.

Die Mitverwendung von Wasser als weiteres Treibmittel kann häufig nicht umgangen werden, da die Ausgangskomponenten, insbesondere die Komponente b), oftmals Spuren von Wasser enthalten und auch manche der eingesetzten Carbonsäuren als Gemische mit Wasser im Handel sind und als solche eingesetzt werden. Im allgemeinen liegt die Gesamtmenge des im Reaktionsgemisch vorliegenden Wassers bei maximal 3 Mol, im allgemeinen bei maximal 1,5 Mol Wasser pro Mol an in den Salzen vorliegenden Carboxylatgruppen. Insbesondere bei Verwendung der als Säurekomponente bevorzugten Milchsäure wird diese oftmals in Form einer 80 bis 99 gew.-%igen wäßrigen Lösung verwendet.

Die Gesamtmenge des eingesetzten Treibmittels (= Komponente c)) richtet sich selbstverständlich nach der jeweils angestrebten Dichte der Formkörper. Im allgemeinen macht das Gewicht der in der Komponente c) vorliegenden Säurekomponente 0,1 bis 10, vorzugsweise 0,4 bis 4 Gew.-% des gesamten aus den Komponenten a), b), c) und d) bestehenden Reaktionsgemischs aus. Die gegenüber Isocyanatgruppen reaktionsfähigen Gruppen der Komponente c) gehen mit in die Berechnung der Isocyanatkennzahl ein.

Bei den gegebenenfalls mitzuverwendenden weiteren Hilfs- und Zusatzmitteln handelt es sich beispielsweise um die an sich bekannten, die Isocyanat-Polyadditionsreaktion beschleunigenden Katalysatoren wie tert. Amine wie Triethylendiamin, N,N-Dimethylbenzylamin oder N,N-Dimethylcyclohexylamin bzw. metallorganische Verbindungen, insbesondere Zinnverbindungen wie Zinn(II)-octoat oder Dibutylzinndilaurat. Auch Trimerisierungskatalysatoren wie beispielsweise Alkaliacetate wie Natrium- oder Kaliumacetat, Alkaliphenolate, wie Natriumphenolat oder Natriumtrichlorphenolat oder 2,4,6-Tris-(dimethylaminomethyl)-phenol oder auch Bleinaphthenat, Bleibenzoat oder Bleioctoat können erfindungsgemäß zum Einsatz gelangen, falls an die Herstellung von Isocyanuratgruppen aufweisenden Polyurethanschaumstoffen gedacht ist.

Weitere, gegebenenfalls mitzuverwendende Hilfs- und Zusatzstoffe d) sind beispielsweise die an sich bekannten Schaumstabilisatoren, beispielsweise jene auf Basis von Polyether-modifizierten Polysiloxanen.

Weitere, gegebenenfalls mitzuverwendende Hilfs- und Zusatzmittel d) sind innere Formtrennmittel, beispielsweise solche der in EP-B-00 81 701, US-PS 3 726 952, GB-PS 1 365 215, US-PS 4 098 731, US-PS 4 058 492, DE-OS 2 319 648, US-PS 4 033 912, US-PS 4 024 090, DE-OS 2 427 273 oder US-PS 4 098 731 beschriebenen Art.

Zur Durchführung des erfindungsgemäßen Verfahrens wird im allgemeinen so vorgegangen, daß die Ausgangskomponenten b) bis d) vorab miteinander vermischt und anschließend mit der Polyisocyanatkomponente a) vereinigt werden. Die letztgenannte Durchmischung erfolgt beispielsweise unter Verwendung von Rührwerksmischern oder vorzugsweise unter Verwendung der üblichen Hochdruck-Mischaggregate, wie sie üblicherweise zur Herstellung von Polyurethanschaumstoffen verwendet werden. Unmittelbar nach der Herstellung des Reaktionsgemisches erfolgt die Befüllung der Form, wobei die Menge des in die Form eingetragenen Reaktionsgemisches der angestrebten Rohdichte der Formkörper angepaßt wird. Neben diesem Einstufen-Verfahren kann das erfindungsgemäße Verfahren auch nach dem Semiprepolymerprinzip durchgeführt werden. Hierbei wird die Gesamtmenge der Polyisocyanatkomponente a) mit einem Teil der Komponente b), beispielsweise unter Einhaltung eines NCO/OH-Äquivalentverhältnisses von mindestens 3:1, vorzugsweise mindestens 8:1 zu einem NCO-Semiprepolymeren umgesetzt, welches anschließend mit einem Gemisch der verbleibenden Komponenten b) bis d) zur Reaktion gebracht wird. Dabei können selbstverständlich zur Herstellung der NCO-Semiprepolymeren Polyhydroxylverbindungen b) eingesetzt werden, die von den Polyhydroxylverbindungen b), die anschließend mit den NCO-Semiprepolymeren abgemischt werden, verschieden sind.

Bei allen Varianten des erfindungsgemäßen Verfahrens werden die Mengenverhältnisse der Einzelkomponenten so gewählt, daß eine Isocyanatkennzahl von 75 bis 1500, vorzugsweise 80 bis 150 vorliegt. Unter "Isocyanatkennzahl" ist hierbei der Quotient aus der Anzahl der Isocyanatgruppen und der Anzahl der gegenüber Isocyanatgruppen reaktionsfähigen Gruppen multipliziert mit 100 zu verstehen. Wesentlich über 100 liegende Isocyanatkennzahlen kommen dann in Betracht, wenn unter gleichzeitiger Mitverwendung von Trimerisierungskatalysatoren die Herstellung von Isocyanurat-modifizierten Polyurethanschaumstoffen angestrebt wird.

Die Rohdichte der Formkörper liegt bei mindestens 250, vorzugsweise bei 400 bis 800 kg/m$^3$.

Im allgemeinen beträgt die Temperatur der zur Anwendung gelangenden Formwerkzeuge mindestens 30°C, vorzugsweise mindestens 50°C. Die Innenwände der Werkzeuge können erforderlichenfalls vor der Befüllung mit an sich bekannten äußeren Formtrennmitteln beschichtet werden.

Die als erfindungsgemäße Treibmittel verwendeten Salze können in allen gängigen Rezepturen zur Herstellung von Polyurethanschaumstoff-Formkörpern mit einer kompakten Oberfläche anstelle der bisher üblichen FCKW-Treibmittel eingesetzt werden, ohne daß in die Katalyse wesentlich eingegriffen werden muß. Es ist lediglich eine Anpassung der Polyisocyanatmenge an die durch Salze zusätzlich eingebrachten NCO-reaktiven Komponenten (Carbonsäure, Stickstoffbase, sowie gegebenenfalls Wasser) erforderlich.

Das erfindungsgemäße Verfahren gestattet somit auch ohne Mitverwendung der bislang stets eingesetzten Fluorchlorkohlenwasserstoffe die Herstellung von hochwertigen Polyurethanschaumstoff-Formteilen einer kompakten, blasenfreien Oberfläche. Das erfindungsgemäße Verfahren eignet sich insbesondere zur Herstellung von halbharten bis harten Integralschaumstoffen mit einer kompakten Oberfläche, wie sie in der Automobil- und Möbelindustrie in großem Umfang zum Einsatz gelangen.

## Beispiele

### Ausgangsmaterialien:

Komponente a):

Polyisocyanatgemisch der Diphenylmethanreihe mit einem NCO-Gehalt von 31 Gew.-% und einem Gehalt an isomeren Diisocyanatdiphenylmethanen von 60 Gew.-%, davon 55 Gew.-% 4,4'- udn ca. 5 Gew.-% 2,4'-Diisocyanatodiphenylmethan.

Polyolkomponente b1):

Propoxylierungsprodukt von Trimethylolpropan der OH-Zahl 860.

Polyolkomponente b2):

Propoxylierungsprodukt von Trimethylolpropan der OH-Zahl 42.

Treibmittel c1):

2-Hydroxypropansäure/Diethanolamin
Äquivalenzverhältnis (1:1)

Treibmittel c2):

2-Hydroxypropansäure/Ammoniak
Äquivalenzverhältnis (1:1)

Treibmittel c3):

2-Hydroxypropansäure/Ethylendiamin
Äquivalenzverhältnis (1:1)

Treibmittel c4):

Propansäure/Diethanolamin
Äquivalenzverhältnis (1:1)

Treibmittel c5):

Ölsäure/Diethanolamin
Äquivalenzverhältnis (1:1)

Zusatzmittel d1) (Stabilisator):
Handelsübliches Polyethersiloxan (®Tegostab OS 50, Hersteller: Goldschmidt AG, 4300 Essen 1).

Zusatzmittel d2) (Katalysator):
N,N-Dimethylcyclohexylamin

Tabelle 1 (alle Zahlen beziehen sich auf Gewichtsteile)

| Komponente | Beispiel 1 | 2 | 3 | 4 | 5 | 6 | 7 |
|---|---|---|---|---|---|---|---|
| b1 | 57 | 57 | 57 | 57 | 57 | 57 | 57 |
| b2 | 39 | 39 | 39 | 39 | 39 | 39 | 39 |
| c1 | 5,85 | - | - | - | - | - | - |
| c2 | - | 3,2 | - | - | - | - | - |
| c3 | - | - | 4,5 | - | - | - | - |
| c4 | - | - | - | 5,4 | - | - | - |
| c5 | - | - | - | - | 11,6 | - | - |
| d1 | 2 | 2 | 2 | 2 | 2 | 2 | 2 |
| d2 | 3 | 3 | 3 | 3 | 3 | 2 | 2 |
| Wasser | 0,3 | 0,3 | 0,3 | 0,3 | 0,3 | 0,84 | - |
| Monofluortrichlormethan | - | - | - | | | - | 6 |
| a | 156 | 156 | 156 | 156 | 156 | 148 | 134 |
| NCO-Kennzahl | 100 | 110 | 110 | 110 | 110 | 110 | 110 |

Allgemeine Anmerkungen zu den Ausführungsbeispielen:

Unter Verwendung der in Tabelle 1 mitgeteilten Rezepturen wurden plattenförmige Schaumstoff-Formkörper der Rohdichte 500 kg/m³ hergestellt (vgl. Tabelle 2). Als Formwerkzeug diente eine Plattenform der Abmessung 10 x 200 x 200 mm, deren Innenwände mit einem handelsüblichen äußeren Formtrennmittel auf Wachsbasis (®Acmosil 180, Hersteller: Acmos, D.2800 Bremen 1) beschichtet worden waren. Vor der Verarbeitung wurden die Polyolmischungen durch kurzzeitiges hochtouriges Rühren (5 Minuten, 1000 UpM, Propellerrührer) mit 10 Vol-%, bezogen auf Atmosphärendruck, feindisperser Luft beladen.

Die Herstellung der Reaktionsgemische aus den Polyolmischungen und der Polyisocyanatkomponente a) erfolgte unter Verwendung einer üblichen Rührwerksmischvorrichtung. Die Dichte der jeweiligen Formkörper wurde durch die Menge des jeweils in die Form eingetragenen Reaktionsgemisches bestimmt.

Beispiele:

1 bis 5 Erfindungsgemäße Beispiele
6 Vergleichsbeispiel mit Wasser als $CO_2$-bildendes Treibmittel
7 Vergleichsbeispiel unter Verwendung von Monofluortrichlormethan als Treibmittel (klassischer Integralschaumstoff hoher Härte).

In der nachstehenden Tabelle 2 wird die Oberflächenhärte Shore D für die einzelnen Schaumstoff-Formkörper mitgeteilt.

**Tabelle 2**

| Rohdichte | Beispiele | | | | | | |
|---|---|---|---|---|---|---|---|
| (kg/m³) | 1 | 2 | 3 | 4 | 5 | 6 | 7 |
| 500 | 66 | 66 | 66 | 66 | 64 | 57 | 69 |

Die Oberflächenhärte der erfindungsgemäßen Beispielserie 1 bis 5 liegt bei allen Rohdichten deutlich über dem Vergleichsbeispiel 6. Sie liegen nur geringfügig unter der Oberflächenhärte des wasserfrei mit R 11 als Treibmittel hergestellten Integralschaums (Vergleichsbeispiel 7).

Beispiele 8 bis 11

(Herstellung von halbharten Formschaumstoffen mit kompakter Oberfläche)

In den nachfolgenden Beispielen 8 bis 11 wurden folgende Ausgangsmaterialien eingesetzt:

Polyisocyanat a):

Urethan-modifiziertes Polyisocyanatgemisch einer mittleren NCO-funktionalität von 2,2 mit einem NCO-Gehalt von 28,5 Gew.-%, hergestellt durch Umsetzung von Polypropylenglykol eines mittleren Molekulargewichts von 218 mit einem Polyisocyanatgemisch der Diphenylmethanreihe bestehend aus 75 Gew.-Teilen 4,4'-Diisocyanatodiphenylmethan, 4 Gew.-Teilen 2,4'-Diisocyanatodiphenylmethan und 21 Gew.-Teilen an höherkernigen Polyisocyanaten der Diphenylmethanreihe.

Polyol b1):

Polyetherpolyol der OH-Zahl 28, hergestellt durch Propoxylierung von Trimethylolpropan und anschließende Ethoxylierung des Propoxylierungsprodukts (Gewichtsverhältnis PO:EO = 80:20).

Polyol b2):

Polyetherpolyol der OH-Zahl 470, hergestellt durch Ethoxylierung von N-Ethyl-diethanolamin.

Treibmittel c1):

Umsetzungsprodukt aus 1 Mol Ethylendiamin und 1 Mol wäßriger, 90 %iger Milchsäure.

Treibmittel c2):

Umsetzungsprodukt aus 1 Mol Diethanolamin und 1 Mol wäßriger, 90 %iger Milchsäure.

Katalysator d1):

30 %ige Lösung von Triethylendiamin in Dipropylenglykol.

Katalysator d2):

Dibutylzinndilaurat

Stabilisator d3):

Handelsüblicher Polyetherpolysiloxan-Stabilisator ("Stabilisator DC 193" der Firma Dow Corning).

Unter Verwendung der in Tabelle 3 mitgeteilten Rezepturen wurden plattenförmige, halbharte Schaumstoff-Formkörper der Rohdichte 600 kg/m³ hergestellt. Als Formwerkzeug diente eine Aluminium-Plattenform der Abmessung 20 x 30 x 1 cm, deren Innenwände mit einem handelsüblichen äußeren Formtrennmittel (®Fluoricon 36-134, Hersteller: Acmos, D 2800 Bremen 1) beschichtet worden waren. Die Formtemperatur wurde jeweils bei 45°C gehalten.

Tabelle 3

| Beispiel Nr. | 8 | 9 | 10 | 11 |
|---|---|---|---|---|
| Polyol b1) (Gew.-Teile) | 90,57 | 90,57 | 90,57 | 90,57 |
| Polyol b2) (Gew.-Teile) | 2,94 | 2,94 | 2,94 | 2,94 |
| Ethylenglykol (Gew.-Teile) | 2,47 | 2,47 | 2,47 | 2,47 |
| Diethanolamin (Gew.-Teile) | 2,78 | 2,78 | 2,78 | 2,78 |
| Wasser (Gew.-Teile) | 0,1 | 0,1 | 0,1 | 0,3 |
| Treibmittel c1) (Gew.-Teile) | 2 | - | - | - |
| Treibmittel c2) (Gew.-Teile) | - | 2 | - | - |
| Monofluortrichlor-methan (Gew.-Teile) | - | - | 5 | - |
| Katalysator d1) (Gew.-Teile) | 0,99 | 0,99 | 0,99 | 0,99 |
| Katalysator d2) (Gew.-Teile) | 0,2 | 0,2 | - | - |
| Stabilisator d3) (Gew.-Teile) | 0,256 | 0,256 | 0,256 | 0,256 |
| Polyisocyanat a) (Gew.-Teile) | 40 | 40 | 40 | 43,5 |
| Kennzahl: | 98 | 103 | 120 | 110 |
| Start- und Abbindezeit (sec) | 15/38 | 22/42 | 32/52 | 17/33 |
| Shore A | 50 | 58 | 61 | 68 |

Im Beispiel 11 wird nur mit Wasser als Treibmittel geschäumt. Die Platte dehnt sich nach dem Entformen noch aus und weist eine höhere Oberflächenhärte auf als die Platten aus Beispielen 8 und 9.

## Patentansprüche

1. Verfahren zur Herstellung von Formkörpern einer Rohdichte von mindestens 250 kg/m³ aus Polyurethanschaumstoffen mit einer kompakten Oberflache durch Formverschäumung eines Reaktionsgemischs aus
   a) einer Polyisocyanatkomponente, bestehend aus mindestens einem aromatischen Polyisocyanat, mit einem NCO-Gehalt von mindestens 20 Gew.-%,
   b) einer Reaktivkomponente, bestehend aus mindestens einer organischen Polyhydroxylverbindung,
   c) Treibmitteln
   und gegebenenfalls
   d) weiteren Hilfs- und Zusatzmitteln
   unter Einhaltung einer Isocyanatkennzahl von 75 bis 1500, dadurch gekennzeichnet, daß man als Treibmittel Salze aus (i) organischen Carbonsauren und (ii) mindestens eine -N-H-Bindung aufweisenden Stickstoffbasen verwendet, wobei die Verwendung von in situ in der Komponente b) aus di- und polyfunktionellen Aminen und organischen Carbonsauren hergestellten Salzen ausgenommen ist.

2. Verfahren gemäß Anspruch 1, dadurch gekennzeichnet, daß man als Treibmittel Salze von aliphatischen oder cycloaliphatischen Carbonsäuren des Molekulargewichtsbereichs 60 bis 300 verwendet.

3. Verfahren gemäß Anspruch 1 und 2, dadurch gekennzeichnet, daß man als Treibmittel Salze verwendet, deren Carbonsäurekomponente neben einer Carboxylgruppe mindestens eine weitere gegenüber Isocyanatgruppen reaktionsfähige Gruppe, ausgewählt aus der Gruppe bestehend aus primaren alkoholischen Hydroxylgruppen, sekundären alkoholischen Hydroxylgruppen, Mercaptogruppen, primären Aminogruppen, sekundären Aminogruppen oder Carboxylgruppen, enhalten.

4. Verfahren gemäß Anspruch 1 bis 3, dadurch gekennzeichnet, daß man als Treibmittel Salze der Milchsäure verwendet.

5. Verfahren gemäß Anspruch 1 bis 4, dadurch gekennzeichnet, daß man als Treibmittel Salze verwendet, die durch Umsetzung einer wäßrigen Losung aus 80 bis 99 Gew.-% Milchsäure und 20 bis 1 Gew.-% Wasser mit einer Stickstoffbase mit mindestens einer N-H-Bindung verwendet.

6. Verfahren gemäß Anspruch 1 bis 5, dadurch gekennzeichnet, daß man als Treibmittel Salze von Basen der allgemeinen Formel

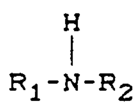

verwendet, wobei

| | |
|---|---|
| $R_1$ | für Wasserstoff, einen gegebenenfalls weitere Stickstoffatome aufweisenden aliphatischen Kohlenwasserstoffrest mit 1 bis 18, vorzugsweise 1 bis 4 Kohlenstoffatomen, einen Hydroxyalkylrest mit 2 bis 4 Kohlenstoffatomen oder einen Rest der Formel -NHR (R = Wasserstoff oder $C_1$-$C_4$-Alkyl) steht und |
| $R_2$ | Wasserstoff, einen Alkylrest mit 1 bis 18, vorzugsweise 1 bis 4 Kohlenstoffatomen, einen Hydroxyalkylrest mit 2 bis 4 Kohlenstoffatomen, einen gegebenenfalls weitere Aminogruppen aufweisenden aromatischen Kohlenwasserstoffrest mit 6 bis 15 Kohlenstoffatomen oder einen Rest bedeutet, wie er durch Entfernen einer Aminogruppe aus einem Polyaminopolyether mit 2 bis 4 primären, aliphatisch gebundenen Aminogruppen des Molekulargewichtsbereich 400 bis 12 000 erhalten wird, mit der Maßgabe, daß dann $R_1$ für Wasserstoff steht oder in welcher |
| $R_1$ und $R_2$ | zusammen mit dem Stickstoffatom einen gegebenenfalls weitere Heteroatome aufweisenden, vorzugsweise gesättigten heterocyclischen Ring mit 5 oder 6 Ringgliedern bilden können. |

7. Verfahren gemäß Anspruch 1 bis 6, dadurch gekennzeichnet, daß man die als Treibmittel eingesetzten Salze vorab in einer separaten Reaktion durch Umsetzung der Stickstoffbase mit der Saure herstellt und dem Polyolgemisch b) zusetzt.

8. Verfahren gemäß Anspruch 1 bis 6, dadurch gekennzeichnet, daß man als Treibmittel c) Salze von Stickstoffbasen mit mindestens einer N-H-Bindung mit Ausnahme von organischen Di- und Polyaminen verwendet und diese Salze durch Reaktion in situ der Stickstoffbase mit der Säure in der Polyolkomponente b) herstellt.

## Claims

1. A process for the production of mouldings having a density of at least 250 kg/m$^3$ of polyurethane foams having a compact skin by foam moulding of a reaction mixture of
   a) a polyisocyanate component consisting of at least one aromatic polyisocyanate having an NCO content of at least 20% by weight,
   b) a reactive component consisting of at least one organic polyhydroxyl compound,
   c) blowing agents
   and, optionally,
   d) other auxiliaries and additives,
   maintaining an isocyanate index of 75 to 1500, characterized in that salts of (i) organic carboxylic acids and (ii) nitrogen bases containing at least one N-H bond are used as blowing agents, the use of salts prepared in situ in component b) from di- and polyfunctional amines and organic carboxylic acids being excluded.

2. A process as claimed in claim 1, characterized in that salts of aliphatic or cycloaliphatic carboxylic acids having a molecular weight in the range from 60 to 300 are used as the blowing agents.

3. A process as claimed in claims 1 and 2, characterized in that salts of which the carboxylic acid component, in addition to a carboxyl group, contains at least one other isocyanate-reactive group selected from the group consisting of primary alcoholic hydroxyl groups, secondary alcoholic hydroxyl groups, mercapto groups, primary amino groups, secondary amino groups or carboxyl groups, are used as the blowing agents.

4. A process as claimed in claims 1 to 3, characterized in that salts of lactic acid are used as the blowing agents.

5. A process as claimed in claims 1 to 4, characterized in that salts obtained by reaction of an aqueous solution of 80 to 99% by weight lactic acid and 20 to 1% by weight water with a nitrogen base containing at least one N-H bond are used as the blowing agents.

6. A process as claimed in claims 1 to 5, characterized in that salts of bases corresponding to the following general formula

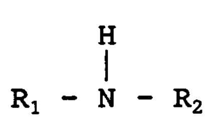

in which

| | |
|---|---|
| $R_1$ | represents hydrogen, an aliphatic $C_{1-18}$ and preferably $C_{1-4}$ hydrocarbon radical optionally containing further nitrogen atoms, a $C_{2-4}$ hydroxyalkyl radical or a group of the formula -NHR (R = hydrogen or $C_{1-4}$ alkyl) and |
| $R_2$ | represents hydrogen, a $C_{1-18}$ and preferably $C_{1-4}$ alkyl radical, a $C_{2-4}$ hydroxyalkyl radical, a $C_{6-15}$ aromatic hydrocarbon radical optionally containing further amino groups or a group of the type obtained by removal of an amino group from a polyamino polyether containing 2 to 4 primary aliphatic amino groups having a molecular weight in the range from 400 to 12,000, with the proviso that, in that case, $R_1$ is hydrogen or in |

which

$R_1$ and $R_2$, together with the nitrogen atom, may form a preferably saturated heterocyclic 5- or 6-membered ring optionally containing further heteroatoms,

are used as the blowing agents.

7. A process as claimed in claims 1 to 6, characterized in that the salts used as blowing agents are prepared beforehand in a separate reaction by reaction of the nitrogen base with the acid and are then added to the polyol mixture b).

8. A process as claimed in claims 1 to 6, characterized in that salts of nitrogen bases containing at least one N-H bond, except for organic diamines and polyamines, are used as the blowing agents c), being prepared by in situ reaction of the nitrogen base with the acid in the polyol component b).

## Revendications

1. Procédé pour la préparation de corps moulés en mousses de polyuréthanne et à surface compacte ayant une masse volumique apparente d'au moins 250 kg/m$^3$ par moussage in situ d'un mélange réactionnel comprenant
   a) un composant de polyisocyanate constitué d'au moins un polyisocyanate aromatique ayant une teneur NCO d'au moins 20 % en poids,
   b) un composant réactif constitué d'au moins un composé polyhydroxylé organique,
   c) des produits moussants
   et éventuellement
   d) d'autres adjuvants et additifs
   en maintenant un indice d'isocyanate de 75 à 1500, caractérisé en ce qu'on utilise, comme produit moussant, des sels (i) d'acides carboxyliques organiques et (ii) de bases azotées présentant au moins une liaison NH, l'utilisation de sels préparés in situ dans le composant b) à partir d'amines di- et polyfonctionnelles et d'acides carboxyliques organiques étant exclue.

2. Procédé selon la revendication 1, caractérisé en ce que, comme produit moussant, on utilise des sels d'acides carboxyliques aliphatiques ou cycloaliphatiques du domaine de poids moléculaire de 60 à 300.

3. Procédé selon les revendications 1 et 2, caractérisé en ce que, comme produit moussant, on utilise des sels dont les composants d'acides carboxyliques contiennent, outre un groupe carboxyle, au moins un groupe supplémentaire apte à réagir vis-à-vis de groupes isocyanate, choisi parmi le groupe constitué par des groupes hydroxyle alcooliques primaires, des groupes hydroxyle alcooliques secondaires, des groupes mercapto, des groupes amino primaires, des groupes amino secondaires ou des groupes carboxyle.

4. Procédé selon la revendication 1 à 2, caractérisé en ce que, comme produit moussant, on utilise des sels de l'acide lactique.

5. Procédé selon les revendications 1 à 4, caractérisé en ce que, comme produit moussant, on utilise des sels que l'on obtient par mise en réaction d'une solution aqueuse de 80 à 99 % en poids d'acide lactique et de 20 à 1 % en poids d'eau, avec une base azotée contenant au moins une liaison NH.

6. Procédé selon les revendications 1 à 5, caractérisé en ce que, comme produit moussant, on utilise des sels de bases répondant à la formule générale

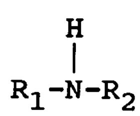

dans laquelle

$R_1$ représente un atome d'hydrogène, un radical d'hydrocarbure aliphatique présentant éventuellement des atomes d'azote supplémentaires, contenant de 1 à 18, de préférence de 1 à 4 atomes de carbone, un radical hydroxyalkyle contenant de 2 à 4 atomes de carbone,

ou un radical de formule -NHR (R = un atome d'hydrogène ou un groupe alkyle en $C_1$-$C_4$), et

$R_2$ représente un atome d'hydrogène, un radical alkyle contenant de 1 à 18, de préférence de 1 à 4 atomes de carbone, un radical hydroxyalkyle contenant de 2 à 4 atomes de carbone, un radical d'hydrocarbure aromatique présentant éventuellement des groupes amino supplémentaires, contenant de 6 à 15 atomes de carbone, ou encore un radical tel qu'on l'obtient par élimination d'un groupe amino d'un polyaminopolyéther, contenant de 2 à 4 groupes amino primaires liés à des radicaux aliphatiques, du domaine de poids moléculaire de 400 à 12.000, avec la mesure qu'alors $R_1$ représente un atome d'hydrogène, ou dans laquelle

$R_1$ et $R_2$ peuvent former ensemble avec l'atome d'azote un noyau hétérocyclique de préférence saturé contenant 5 ou 6 termes cycliques, présentant éventuellement des hétéro-atomes supplémentaires.

**7.** Procédé selon les revendications 1 à 6, caractérisé en ce qu'on prépare les sels mis en oeuvre comme produit moussant, au préalable dans une réaction séparée en faisant réagir la base azotée avec l'acide et on l'ajoute au mélange de polyols b).

**8.** Procédé selon les revendications 1 à 6, caractérisé en ce qu'on utilise, comme produit moussant c), des sels de bases azotées contenant au moins une liaison NH, à l'exclusion de di- et polyamines organiques, et on prépare ces sels par mise en réaction in situ de la base azotée avec l'acide dans le composant de polyol b).